# EUROPEAN PATENT SPECIFICATION

(11) **EP 1 474 986 B1**
(45) Date of publication and mention of the grant of the patent: **24.05.2006**
(21) Application number: 04251553.6
(22) Date of filing: 18.03.2004
(51) Int. Cl.: A21B 7/00, A47J 37/00

(54) **Bread maker and control method thereof**
Brotbackmaschine und deren Steuerungsmethode
Machine de fabrication de pain et méthode de côntrole associée

(30) Priority: 07.05.2003 KR 2003028978
(43) Date of publication of application: 10.11.2004
(73) Proprietor: SAMSUNG ELECTRONICS CO., LTD., Suwon-si, Gyeonggi-do (KR)
(72) Inventor: Sung, Han-jun, Paldal-ku, Suwon City, Kyungki-do (KR); Kwon, Yong-hyun, Paldal-ku Suwon city, Kyungki-do (KR); Kim, Chul, Dongan-ku Anyang city Kyungki-do (KR); Lee, Tae-uk, Changan-ku Suwon city Kyungki-do (KR); Park, Jae-ryong, Paldal-ku, Suwon city, Kyungki-do (KR); Lee, Jang-woo, Paldal-ku, Suwon city, Kyungki-do (KR); Lim, Dong-bin, Paldal-ku, Suwon city, Kyungki-do (KR)
(74) Representative: Brandon, Paul Laurence

(56) References cited:
- EP-A- 1 382 258
- EP-A- 1 382 259

## Description

The present invention relates to bread makers and control methods thereof.

Generally, a bread maker kneads raw materials for bread by rotation of kneading drums after a mixing bag filled with raw materials is wound on the kneading drums. Thus, it is required for a user to attach the mixing bag on holders of the kneading drums.

Herein, the user has adjusted a rotation angle of the kneading drums so that the holders of the kneading drums can face frontward.

EP-A-1382258 discloses a bread maker comprising a main body forming an oven compartment; upper and lower kneading drums spaced apart from each other inside the oven compartment, each kneading drum having a holder for holding opposite ends of a mixing bag filled with raw materials; a drum driving part rotating the upper and lower kneading drums; a rotation sensing part sensing rotation positions of the controller of the upper kneading drum; and a controller which controls the drum driving part. The position of the upper kneading drum is manually controllable by a user. EP-A-1382258 forms part of the state of the art for the purposes of Article 54(3) EPC only.

It is an aim of preferred embodiments of the present invention to provide a bread maker and a control method thereof, wherein in a predetermined process, holders provided in kneading drums of the bread maker and holding opposite ends of a mixing bag filled with raw materials for bread stop within a predetermined angle range in which the holders thereof face frontward.

Therefore, a bread maker according to the present invention, comprises: a main body forming an oven compartment; upper and lower kneading drums spaced apart from each other inside the oven compartment, each kneading drum having a holder for holding opposite ends of a mixing bag filled with raw materials; a drum driving part rotating the upper and lower kneading drums; a rotation sensing part sensing rotation positions of the holder of the upper kneading drum; and a controller which controls the drum driving part, so that when an initial power is supplied, the upper kneading drum is rotated by a predetermined angle to make the holder of the upper kneading drum stop within a predetermined angle range in which the holder of the upper kneading drum faces frontward on the basis of a position sensing signal of the rotation sensing part.

Suitably, the controller controls the drum driving part so that an upper end of the mixing bag is wound on the upper kneading drum by a predetermined length after being attached to the holder of the upper kneading drum, and then the holder of the lower kneading drum stops within a predetermined angle range in which the holder of the lower kneading drum faces frontward.

Suitably, the controller controls the drum driving part so that after a kneading process is completed, the mixing bag is downwardly wound to be detached from the upper kneading drum and wound on the lower kneading drum, and then the lower kneading drum is rotated to unwind the mixing bag until the holder of the lower kneading drum stops within a predetermined angle range in which the holder of the lower kneading drum faces frontward.

Suitably, the holder comprises a plurality of holding projections and the mixing bag has holding holes engaged to the holding projections.

Therefore, a method of controlling a bread maker having a main body forming an oven compartment, upper and lower kneading drums spaced apart from each other inside the oven compartment with each kneading drum having a holder holding opposite ends of a mixing bag filled with raw materials, and a drum driving part rotating the kneading drums to knead the raw materials contained in the mixing bag, according to the present invention, comprises supplying an initial power; when an initial power is supplied, rotating the upper kneading drum by a predetermined angle; sensing positions of the holder of the upper kneading drum; and making the holder of the upper kneading drum stop within a predetermined angle range in which the holder of the upper kneading drum faces frontward.

Suitably, the method further comprises attaching an upper end of the mixing bag to the upper kneading drum and winding the upper end of the mixing bag onto the upper kneading drum by a predetermined length; making the holder of the lower kneading drum stop within a predetermined angle range in which the holder of the lower kneading drum faces frontward; and attaching a lower end of the mixing bag to the holder of the lower kneading drum.

Suitably, the method further comprises kneading the raw materials in the mixing bag by rotating the upper and lower kneading drums clockwise and counterclockwise; downwardly winding the mixing bag after the kneading process is completed; detaching the upper end of the mixing bag from the upper kneading drum; winding the mixing bag on the lower kneading drum; rotating the lower kneading drum so that the wound mixing bag can be unwound from the lower kneading drum; and making the holder of the lower kneading drum stop within a predetermined angle range in which the holder of the lower kneading drum faces frontward.

The present invention will become apparent and more readily appreciated from the following description of the preferred embodiments, by way of example only, taken in conjunction with the accompany drawings of which:
FIG. 1 is a perspective view of a mixing bag filled with raw materials and a bread maker according to an embodiment of the present invention;
FIG. 2 is a cut-away perspective view of a component compartment of the bread maker in FIG. 1;
FIG. 3 is an enlarged exploded view of a rotation sensing part of the component compartment in FIG. 2;
FIG. 4 is a control block diagram of the bread maker in FIG. 1; and
FIG. 5 is a control flow diagram of the bread maker in FIG. 1.

Reference will now be made in detail to the embodiments of the present invention, examples of which are illustrated in the accompanying drawings, wherein like reference numerals refer to the like elements throughout. The embodiments are described below in order to explain the present invention by referring to the figures.

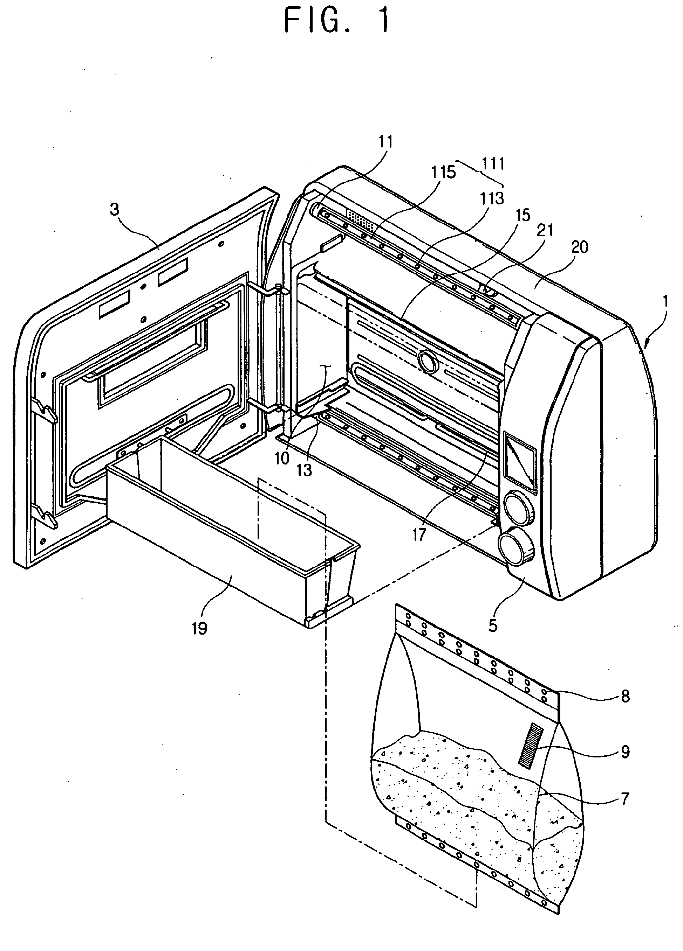

As shown in FIG. 1, a bread maker according to an embodiment of the present invention includes a main body 1 divided into an oven compartment 10 and an electric component compartment 20, a door 3 in the front of the main body 1 to open and close a front opening of the oven compartment 10, and a control panel 5 provided in the front of the main body 1 and displaying the status of the bread maker.

The oven compartment 10 includes upper and lower kneading drums 11 and 13 which are spaced from each other and provided in parallel, a baking tray 19 provided between the upper and lower kneading drums 11 and 13 and accommodating raw materials (ingredients) kneaded in the mixing bag 7, kneading members 15 provided in an upper part of the oven compartment 10 between the heaters 17 and the upper kneading drum 11 and preventing the raw materials in the mixing bag 7 from being slipped out of an upper part the baking tray 19, and heaters 17 respectively provided in a rear-side wall of the oven compartment 10, and upper and lower parts of the rear (a side toward the oven compartment 10) of the door 3 and heating an interior of the oven compartment 10.

The upper and lower kneading drums 11 and 13 comprise holders 111 provided along axes thereof and holding opposite ends of the mixing bag 7 filled with the raw materials. Also, upper and lower kneading drums 11 and 13 rotate clockwise and counterclockwise to knead the raw materials in the mixing bag 7. The holders 111 have holding planes 115 and holding projections 113 projected at regular intervals along the holding plane 115. However, the present invention is not limited to the above configuration. Holding grooves or holding clips may, for instance, be substituted for the holding projection 113. The electric component compartment 20 is provided in a rear part and one side of the oven compartment 10.

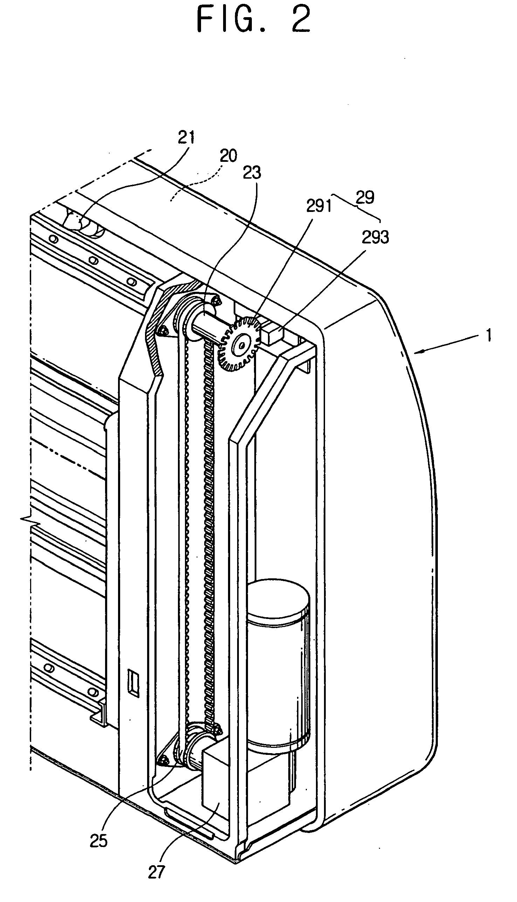

As shown in FIG. 2, one side of the oven compartment 10 includes a rotation sensing part 29, sensing a rotation position of at least one of the upper and lower kneading drums 11 and 13, rotation shafts 23 of the upper and lower kneading drums 11 and 13, a driving motor 27 rotating the lower kneading drum 11, and a belt 25 linking the rotation shafts 23 of the upper and lower kneading drums 11 and 13 and allowing the upper and lower kneading drums 11 and 13 to be rotated together. The rear part of the oven compartment 10 includes a barcode scanner 21.

The barcode scanner 21 reads a barcode attached on the mixing bag 7 when the mixing bag 7 is wound on the upper and lower kneading drums 11 and 13.

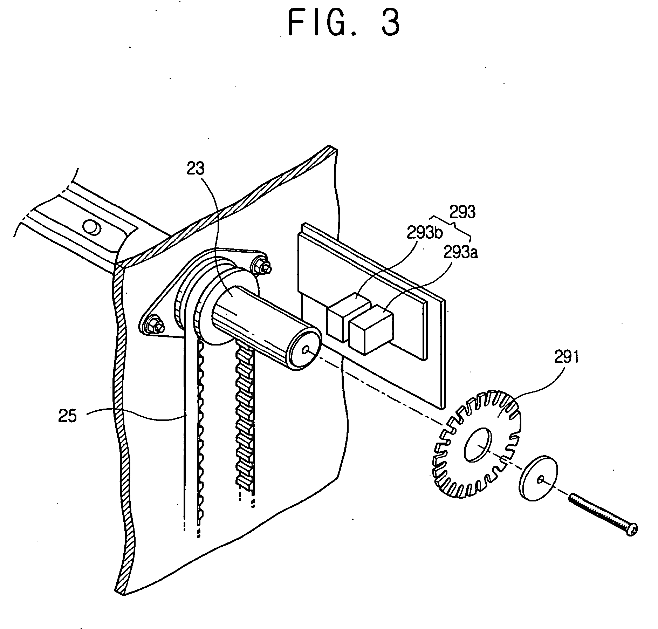

As shown in FIG. 3, the rotation sensing part 29 comprises a rotation disc 291 mounted in the rotation shaft 23 of the upper kneading drums 11 as a circular shaped member and having convex sections and concave sections in the circumference of the circular shaped member, and a rotation signal sensor 293 having a radiating part 293a and a signal sensing part 293b provided in parallel with the rotation disc 291 interposed therebetween.

Minute rotation positions of the upper kneading drum 11 are detected by using a signal generated in the radiating part 293a. The signal is transmitted toward the signal sensing part 293b and is blocked by the convex sections and transmitted through the concave sections of the rotation disc 291 in a predetermined period. Thus, a rotation position that is achieved when the upper kneading drum 11 is rotated one time is determined by sensing that a blocked time of the transmitted signal which is longer due to the movement of a predetermined section 291a of the convex sections, which is longer than the other convex sections, occurs twice, thereby indicating that the predetermined section 291(a) has made one full rotation.

The rotation positions of the upper kneading drum 11 are not sensed only by the above configuration. The rotation disc 291 may be engaged to the rotation shaft of the lower kneading drum 13. The radiating part 293a and the signal sensing part 293b of the rotation signal sensor 293 are provided, the circumference of the rotation disc 291 being interposed between the radiating part 293a and the signal sensing part 293b. Also, the rotation disc 291 may be separately provided as (i) a rotation disc to sense only minute positions and (ii) a rotation disc to sense only a rotation position when the upper or lower kneading drum 11 or 13 is rotated one time. The radiating part 293a and the signal sensing part 293b of the rotation signal sensor 293 may be provided, the rotation discs of (i) and (ii) each being respectively interposed between radiating parts similar to the radiating part 293a and signal sensing parts similar to the signal sensing part 293b of the rotation signal sensor 293.

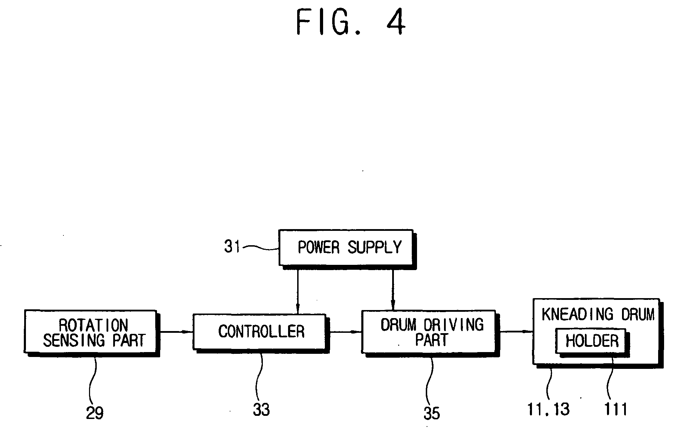

According to this embodiment of the present invention, a control process of the bread maker with the above configuration is described as follows, with reference to FIG. 4.

An initial power is supplied to the bread maker by a power supply 31, and then an electric signal is transmitted to a controller 33. The drum driving part 35 receives the signal from the controller 33 and rotates the upper and lower kneading drums 11 and 13 by a predetermined angle.

The rotation sensing part 29 detects rotation positions of the upper and lower kneading drums 11 and 13 and transmits signals corresponding to the detected rotation position to the controller 33. The controller 33 controls the drum driving part 35 so that the holders 111 of the upper and lower kneading drums 11 and 13 can stop within a predetermined angle range in which the holders 111 thereof face frontward.

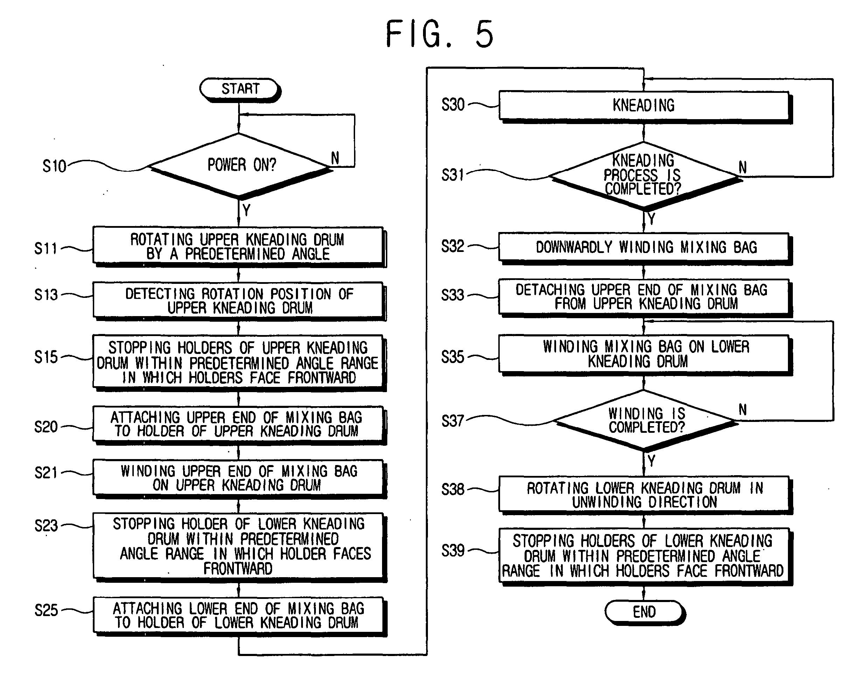

A control flow of the bread maker is described as follows with reference to FIG. 5.

If an initial power is supplied to the bread maker by the power supply 31 (1000), an electric signal is transmitted to the controller 33 and then the drum driving part 35 rotates the upper and lower kneading drums 11 and 13 by a predetermined angle (1100). Herein, the rotation sensing part 29 detects rotation positions of the upper kneading drum 11 and detects the position of the holders 111 of the upper kneading drum 11 (1300). The controller 33 receives signals corresponding to the detected rotation position of the holders 111 and controls the drum driving part 35 so that the holders 111 of the upper and lower kneading drums 11 and 13 can stop within a predetermined angle range in which the holders 111 thereof face frontward (1500).

Herein, the supplying of the initial power may be to initially supply power when power of the bread maker is off, but may include other embodiments. In a state that the power of the bread maker is on, a first electric signal to make bread may be transmitted to the controller 33 by an action of opening the door 3 of the bread maker. Also, the first electric signal to make bread may be transmitted to the controller 33 by pressing a bread making start button to start making bread.

A user attaches an upper end of the mixing bag 7 to the holder 111 of the upper kneading drum 11 (2000). That is, a user inserts holding holes 8 provided in the upper end of the mixing bag 7 into the holding projections 113 of the holder 111 of the upper kneading drums 11 formed along the axis direction of the upper kneading drum 11. The controller 33 controls the drum driving part 35 so that the upper end of the mixing bag 7 is upwardly wound on the upper kneading drum 11 (2100). Herein, the upper and lower kneading drums 11 and 13 are rotated together by the belt 25. The controller 33 controls the drum driving part 35 so that the holder 111 of the lower kneading drum 13 can stop within a predetermined angle range in which the holder 111 of the lower kneading drum 13 faces frontward (2300).

A user inserts holding holes 8 provided in a lower part of the mixing bag 7 into the holding projections 113 of the holder 111 of the lower kneading drum 13 formed along an axis direction of the lower kneading drum 13, and attaches the lower end of the mixing bag 7 to the holder 111 of the lower kneading drum 13 (2500).

The controller 33 kneads the raw materials according to a program of the barcode 9 which is attached on the mixing bag 7 and read by the barcode scanner 21 (3000). The controller 33 determines whether the kneading is completed (3100). When the kneading according to the program is completed, the controller 33 controls the drum driving part 35 so that the mixing bag 7 is downwardly wound (3200), and thus makes the upper end of the mixing bag 7 detached from the upper kneading drum 11 (3300). The lower end of the mixing bag 7 not detached from the lower kneading drum 13 is continuously wound on the lower kneading drum 13 (3500). When the winding is completed (3700), the controller 33 controls the lower kneading drum 13 to unwind the wound mixing bag 7 (3800). The controller 33 detects rotation positions of the lower kneading drum 13 and controls the drum driving part 35 so that the holder 111 of the lower kneading drum 13 can stop within the predetermined angle range in which the holder 111 thereof faces frontward (3900).

Thus, a user can directly attach the mixing bag 7 to the upper and lower kneading drums 11 and 13 without adjusting the rotation angle of the holders 111 of the upper and lower kneading drums 11 and 13 to face frontward. In particular, even when new bread making process starts after a series of bread making processes ends, a user can directly attach the mixing bag 7 to the upper and lower kneading drums 11 and 13 without adjusting the rotation angle of the holders 111 of the upper and lower kneading drums 11 and 13 to face frontward.

As described above, according to preferred embodiments of the present invention, provided is a bread maker and a control method thereof, wherein in a predetermined process, holders provided in kneading drums of the bread maker and holding opposite ends of a mixing bag filled with raw materials for bread stop within a predetermined angle range in which the holders thereof face frontward.

Although a few embodiments of the present invention have been shown and described, it will be appreciated by those skilled in the art that changes may be made in these embodiments without departing from the principles of the invention, the scope of which is defined in the appended claims and their equivalents.

## Claims

1. A bread maker, comprising:
a main body (1) forming an oven compartment (10);
upper and lower kneading drums (11, 13) spaced apart from each other inside the oven compartment (10), each kneading drum (11, 13) having a holder (111) for holding opposite ends of a mixing bag (7) filled with raw materials;
a drum driving part (35) rotating the upper and lower kneading drums (11, 13);
a rotation sensing part (29) sensing rotation positions of the holder (11) of the upper kneading drum (11); and
a controller (33) which controls the drum driving part (35) so that when an initial power is supplied, the upper kneading drum (11) is rotated by a predetermined angle to make the holder (111) of the upper kneading drum (11) stop within a predetermined angle range in which the holder (111) of the upper kneading drum (11) faces frontward based upon a position sensing signal of the rotation sensing part (29).

2. The bread maker according to claim 1, wherein the controller (33) controls the drum driving part (35) so that an upper end of the mixing bag (7) is wound on the upper kneading drum (11) by a predetermined length after being attached to the holder (111) of the upper kneading drum (11), and then the holder (111) of the lower kneading drum (13) stops within a predetermined angle range in which the holder (111) of the lower kneading drum (13) faces frontward.

3. The bread maker according to claim 1 or claim 2 , wherein the controller (33) controls the drum driving part (35) so that after a kneading process is completed, the mixing bag (7) is downwardly wound to be detached from the upper kneading drum (11) and wound on the lower kneading drum (13), and then the lower kneading drum (13) is rotated to unwind the mixing bag (7) until the holder (111) of the lower kneading drum (13) stops within a predetermined angle range in which the holder (111) of the lower kneading drum (13) faces frontward.

4. The bread maker according to any preceding claim, wherein the holder (111) comprises a plurality of holding projections (113) and the mixing bag (7) has holding holes (8) engaged to the holding projections (113).

5. A method of controlling a bread maker having a main body (1) forming an oven compartment (10), upper and lower kneading drums (11, 13) spaced apart from each other inside the oven compartment (10) with each kneading drum (11, 13) having a holder (111) for holding opposite ends of a mixing bag (7) filled with raw materials, and a drum driving part (35) rotating the kneading drums (11, 13) to knead the raw materials contained in the mixing bag (7), the method comprising:
supplying an initial power;
when an initial power is supplied, rotating the upper kneading drum (11) by a predetermined angle;
sensing positions of the holder of the upper kneading drum (11); and
making the holder (111) of the upper kneading drum (11) stop within a predetermined angle range in which the holder (111) of the upper kneading drum (11) faces frontward.

6. The method according to claim 5, further comprising:
attaching an upper end of the mixing bag (7) to the upper kneading drum (11) and winding the upper end of the mixing bag (7) onto the upper kneading drum (11) by a predetermined length; and
attaching a lower end of the mixing bag (7) to the holder (111) of the lower kneading drum (13).

7. The method according to claim 6, further comprising:
kneading the raw materials in the mixing bag (7) by rotating the upper and lower kneading drums (11, 13) clockwise and counterclockwise;
downwardly winding the mixing bag (7) after the kneading process is completed;
detaching the upper end of the mixing bag (7) from the upper kneading drum (11);
winding the mixing bag (7) on the lower kneading drum (13) ;
rotating the lower kneading drum (13) so that the wound mixing bag (7) is unwound from the lower kneading drum (13); and
making the holder (111) of the lower kneading drum (13) stop within a predetermined angle range in which the holder (111) of the lower kneading drum (13) faces frontward.

## Patentansprüche

1. Brotbackmaschine, die umfasst:
ein Hauptgehäuse (1), das eine Ofenkammer (10) aufweist;
eine obere und eine untere Knetwalze (11, 13), die voneinander im Inneren der Ofenkammer (10) beabstandet sind, wobei jede Knetwalze (11, 13) einen Halter (111) zum Halten einander gegenüberliegender Enden eines Mischbeutels (7) hat, der mit Rohstoffen gefüllt ist;
einen Walzenantriebsteil (35), der die obere und die untere Knetwalze (11, 13) dreht;
einen Drehungserfassungsteil (29), der Drehpositionen des Halters (111) der oberen Knetwalze (11) erfasst; und
eine Steuereinrichtung (33), die auf Basis eines Positionserfassungssignals des Drehungserfassungsteils (29) den Walzenantriebsteil (35) so steuert, dass, wenn eine Anfangsenergie zugeführt wird, die obere Knetwalze (11) um einen vorgegebenen Winkel gedreht wird, so dass der Halter (111) der oberen Knetwalze (11) innerhalb eines vorgegebenen Winkelbereiches anhält, in dem der Halter (111) der oberen Knetwalze (11) nach vorn gewandt ist.

2. Brotbackmaschine nach Anspruch 1, wobei die Steuereinrichtung (33) den Walzenantriebsteil (35) so steuert, dass ein oberes Ende des Mischbeutels (7) um eine vorgegebene Länge auf die obere Knetwalze (11) gewickelt wird, nachdem es an dem Halter (111) der oberen Knetwalze (11) angebracht ist, und dann der Halter (111) der unteren Knetwalze (11) innerhalb eines vorgegebenen Winkelbereiches anhält, in dem der Halter (111) der unteren Knetwalze (13) nach vorn gewandt ist.

3. Brotbackmaschine nach Anspruch 1 oder Anspruch 2, wobei die Steuereinrichtung (33) den Walzenantriebsteil (35) so steuert, dass, nachdem ein Knetvorgang abgeschlossen ist, der Mischbeutel (7) nach unten gewickelt wird, um ihn von der oberen Knetwalze (11) zu lösen, er auf die untere Knetwalze (13) gewickelt wird und dann die untere Knetwalze (13) gedreht wird, um den Mischbeutel (7) abzuwickeln, bis der Halter (111) der unteren Knetwalze (13) innerhalb eines vorgegebenen Winkelbereiches anhält, in dem der Halter (111) der unteren Knetwalze (13) nach vorn gewandt ist.

4. Brotbackmaschine nach einem der vorangehenden Ansprüche, wobei der Halter (111) eine Vielzahl von Haltevorsprüngen (113) umfasst und der Mischbeutel (7) Haltelöcher (8) aufweist, die mit den Haltevorsprüngen (113) in Eingriff gebracht werden.

5. Verfahren zum Steuern einer Brotbackmaschine, die ein Hauptgehäuse (1), das eine Ofenkammer (10) aufweist, eine obere und eine untere Knetwalze (11, 13), die voneinander im Inneren der Ofenkammer (10) beabstandet sind, wobei jede Knetwalze (11, 13) einen Halter (111) zum Halten einander gegenüberliegender Enden eines Mischbeutels (7) hat, der mit Rohstoffen gefüllt ist, und einen Walzenantriebsteil (35) hat, der die Knetwalzen (11, 13) dreht, um die in dem Mischbeutel (7) enthaltenen Rohstoffe zu kneten, wobei das Verfahren umfasst:
Zuführen einer Anfangsenergie;
wenn eine Anfangsenergie zugeführt wird, Drehen der oberen Knetwalze (11) um einen vorgegebenen Winkel;
Erfassen von Positionen des Halters der oberen Knetwalze (11); und
Anhalten des Halters (111) der oberen Knetwalze (11) innerhalb eines vorgegebenen Winkelbereiches, in dem der Halter (111) der oberen Knetwalze (11) nach vorn gewandt ist.

6. Verfahren nach Anspruch 5, das des Weiteren umfasst:
Anbringen eines oberen Endes des Mischbeutels (7) an der oberen Knetwalze (11) und Wickeln des oberen Endes des Mischbeutels (7) auf die obere Knetwalze (11) um eine vorgegebene Länge; und
Anbringen eines unteren Endes des Mischbeutels (7) an dem Halter (111) der unteren Knetwalze (13).

7. Verfahren nach Anspruch 6, das des Weiteren umfasst:
Kneten der Rohmaterialien in dem Mischbeutel (7) durch Drehen der oberen und der unteren Knetwalze (11, 13) im Uhrzeigersinn und entgegen dem Uhrzeigersinn;
Wickeln des Mischbeutels (7) nach unten, nachdem der Knetvorgang abgeschlossen ist;
Lösen des oberen Endes des Mischbeutels (7) von der oberen Knetwalze (11);
Wickeln des Mischbeutels (7) auf die untere Knetwalze (13);
Drehen der unteren Knetwalze (13), so dass der aufgewickelte Mischbeutel (7) von der unteren Knetwalze (13) abgewickelt wird; und
Anhalten des Halters (111) der unteren Knetwalze (13) innerhalb eines vorgegebenen Winkelbereiches, in dem der Halter (111) der unteren Knetwalze (13) nach vorn gewandt ist.

## Revendications

1. Machine à pain comprenant :
un corps principal (1) formant un compartiment de four (10) ;
des tambours pétrisseurs supérieur et inférieur (11, 13) espacés l'un de l'autre à l'intérieur du compartiment de four (10), chaque tambour pétrisseur (11, 13) ayant une fixation (111) destinée à fixer des extrémités opposées d'un sac mélangeur (7) rempli de matières premières ;
une partie d'entraînement des tambours (35), qui fait tourner les tambours pétrisseurs supérieur et inférieur (11, 13) ;
une partie de détection de la rotation (29) qui détecte les positions de rotation de la fixation (11) du tambour pétrisseur supérieur (13) ; et
un contrôleur (33) qui commande la partie d'entraînement des tambours (35) de telle manière que, lorsqu'une puissance initiale est appliquée, le tambour pétrisseur supérieur (11) soit tourné d'un angle prédéterminé pour amener la fixation (111) du tambour pétrisseur supérieur (11) à s'arrêter dans un intervalle angulaire prédéterminé dans lequel la fixation (111) du tambour pétrisseur supérieur (11) est dirigée vers l'avant en réponse à un signal de détection de position de la partie de détection de la rotation (29).

2. Machine à pain selon la revendication 1, dans laquelle le contrôleur (33) commande la partie d'entraînement du tambour (35) de telle manière qu'une extrémité supérieure du sac mélangeur (7) soit enroulée d'une longueur prédéterminée sur le tambour pétrisseur supérieur (11) après avoir été attachée à la fixation (111) du tambour pétrisseur supérieur (11), et qu'à ce moment, la fixation (111) du tambour pétrisseur inférieur (13) s'arrête dans un intervalle angulaire prédéterminé dans lequel la fixation (111) du tambour pétrisseur inférieur (13) est dirigée vers l'avant.

3. Machine à pain selon la revendication 1 ou la revendication 2, dans laquelle le contrôleur (33) commande la partie d'entraînement des tambours (35) de telle manière que, lorsqu'une opération de pétrissage est terminée, le sac mélangeur (7) soit enroulé vers le bas de façon à être détaché du tambour pétrisseur supérieur (11) et à être enroulé sur le tambour pétrisseur inférieur (13), et qu'ensuite, le tambour pétrisseur inférieur (13) soit amené à tourner pour dérouler le sac mélangeur (7) jusqu'à ce que la fixation (111) du tambour pétrisseur inférieur (13) s'arrête dans un intervalle angulaire prédéterminé dans lequel la fixation (111) du tambour pétrisseur inférieur (13) est dirigée vers l'avant.

4. Machine à pain selon une quelconque des revendications précédentes, dans laquelle la fixation (111) comprend une pluralité de saillies de fixation (113), et le sac mélangeur (7) présente des trous de fixation (8) en prise avec les saillies de fixation (113).

5. Procédé de commande d'une machine à pain ayant un corps principal (1) qui forme un compartiment de four (10), des tambours pétrisseurs supérieur et inférieur (11, 13) espacés l'un de l'autre à l'intérieur du compartiment de four (10), chaque tambour pétrisseur (11, 13) ayant une fixation (111) destinée à fixer des extrémités opposées d'un sac mélangeur (7) rempli de matières premières, et une partie d'entraînement des tambours (35) qui fait tourner les tambours pétrisseurs (11, 13) pour pétrir les matières premières contenues dans le sac mélangeur (7), le procédé comprenant les étapes suivantes :
fournir une puissance initiale ;
lorsqu'une puissance initiale est fournie, faire tourner le tambour pétrisseur supérieur (11) d'un angle prédéterminé ;
détecter des positions de la fixation du tambour pétrisseur supérieur (11) ; et
amener la fixation (111) du tambour pétrisseur supérieur (11) à s'arrêter dans un intervalle angulaire prédéterminé dans lequel la fixation (111) du tambour pétrisseur supérieur (11) est dirigée vers l'avant.

6. Procédé selon la revendication 5, comprenant de plus les étapes suivntes :
attacher une extrémité supérieure du sac mélangeur (7) au tambour pétrisseur supérieur (11) et enrouler l'extrémité supérieure du sac mélangeur (7) d'une longueur prédéterminée sur le tambour pétrisseur supérieur (11) ; et
attacher une extrémité inférieure du sac mélangeur (7) à la fixation (111) du tambour pétrisseur inférieur (13).

7. Procédé selon la revendication 6, comprenant de plus les étapes suivantes :
pétrir les matières premières dans le sac mélangeur (7) en faisant tourner les tambours pétrisseurs supérieur et inférieur (11, 13) dans le sens des aiguilles d'une montre et dans le sens inverse des aiguilles d'une montre ;
enrouler le sac mélangeur (7) vers le bas lorsque l'opération de pétrissage est terminée ;
détacher l'extrémité supérieure du sac mélangeur (7) du tambour pétrisseur supérieur (11) ;
enrouler le sac mélangeur (7) sur le tambour pétrisseur inférieur (13) ;
faire tourner le tambour pétrisseur inférieur (13) de telle manière que le sac mélangeur (7) enroulé soit déroulé du tambour pétrisseur inférieur (13) ; et
amener la fixation (111) du tambour pétrisseur inférieur (13) à s'arrêter dans un intervalle angulaire prédéterminé dans lequel la fixation (111) du tambour pétrisseur inférieur (13) est dirigée vers l'avant.
